# EUROPEAN PATENT APPLICATION

(11) **EP 2 412 774 A1**
(43) Date of publication of application: **01.02.2012**
(21) Application number: 11175892.6
(22) Date of filing: 29.07.2011
(51) Int. Cl.: C09J 7/02, B32B 7/06

(54) **Application tape and protective pressure-sensitive adhesive sheet equipped with application tape**

(30) Priority: 30.07.2010 JP 2010172056; 28.04.2011 JP 2011100542
(71) Applicant: Nitto Denko Corporation, Osaka 567-8680 (JP)
(72) Inventor: Kai, Makoto, Ibaraki-shi, Osaka 567-8680 (JP); Nakagawa, Yoshio, Ibaraki-shi, Osaka 567-8680 (JP); Uesugi, Masanori, Ibaraki-shi, Osaka 567-8680 (JP); Oosawa, Yuka, Ibaraki-shi, Osaka 567-8680 (JP); Yamamoto, Yasunori, Ibaraki-shi, Osaka 567-8680 (JP); Nishikawa, Kenichi, Ibaraki-shi, Osaka 567-8680 (JP)
(74) Representative: Grünecker, Kinkeldey, Stockmair & Schwanhäusser

(57) **Abstract**

The present invention relates to an application tape, which has a function of improving an application workability when a protective pressure-sensitive adhesive sheet is applied to an adherend, in which the application tape has a surface that has a coefficient of static friction for a PET film of 0.05-1.0 in the case where the PET film is slid on the application tape having a size of 30 mm × 30 mm under a condition of a load of 100 g and a rate of 100 mm/min, and the application tape has a Young's modulus of 300 MPa or lower.
In a preferred embodiment the base layer of the tape comprises a soft polyvinyl chloride which contains a plasticizer and the adhesive layer comprises an acrylic pressure-sensitive adhesive.

## Description

### TECHNICAL FIELD

The present invention relates to an application tape and a protective pressure-sensitive adhesive sheet equipped with the application tape. More particularly, the present invention relates to an application tape and a protective pressure-sensitive adhesive sheet which have moderate surface slip properties, moderate flexibility, and moderate peel strength.

### BACKGROUND ART

In the automobile and aircraft industries, for example, there are cases where a transparent pressure-sensitive adhesive sheet is applied to the painted surface of the body of a motor vehicle or the like in order to prevent the painted surface from being damaged. This pressure-sensitive adhesive sheet for painted-surface protection is directly applied to the painted surface by hand using a squeegee or the like, but there are problems, for example, that positional shifting occurs, the pressure-sensitive adhesive sheet is soiled by the hands, and the pressure-sensitive adhesive sheet creases when bent. There also has been a problem that the squeegee does not slide on the surface of the pressure-sensitive adhesive sheet for painted-surface protection, and this leads to troubles such as creases of the protective pressure-sensitive adhesive sheet. Even when an application tape is used to apply a pressure-sensitive adhesive sheet for painted-surface protection to, for example, a body surface, the conventional application tape has a problem concerning surface slip properties and there are cases where squeegee slippage is insufficient. In addition, when an application tape has poor fitting properties to curved surfaces, there may be caused a problem that application of this protective pressure-sensitive adhesive sheet to an adherend having curved surfaces in such a manner that the sheet follows the curved surfaces becomes difficult. Furthermore, there may be caused a problem that when the application tape which has become unnecessary after application is to be peeled off, the tape cannot be peeled from the pressure-sensitive adhesive sheet for painted-surface protection.

Patent Document 1: JP-A-2006-248120

### SUMMARY OF THE INVENTION

The present invention has been made in order to overcome the problems described above, and an object of the present invention is to provide an application tape having moderate slip properties, moderate flexibility, and moderate adhesive strength. Another object is to provide a protective pressure-sensitive adhesive sheet equipped with the application tape.

The application tape according to the present invention, which is utilized when a protective pressure-sensitive adhesive sheet is applied to an adherend, has a function of improving a workability of application of the protective pressure-sensitive adhesive sheet. The application tape has a surface that has a coefficient of static friction for a PET film of 0.05-1.0 in the case where the PET film is slid on the application tape having a size of 30 mm × 30 mm under a condition of a load of 100 g and a rate of 100 mm/min, and the application tape has a Young's modulus of 300 MPa or lower.
It is preferred that the application tape has a lower adhesive strength to the protective pressure-sensitive adhesive sheet than the adhesive strength of the protective pressure-sensitive adhesive sheet to the adherend.
Moreover, it is preferred that the application tape comprises a base and a pressure-sensitive adhesive layer, and the base comprises a flexible polyvinyl chloride which contains a plasticizer.

Further, it is preferred that the application tape according to the present invention comprises a base and a pressure-sensitive adhesive layer, in which the base comprises a flexible polyvinyl chloride which contains a plasticizer, the opposite surface of the base from the pressure-sensitive adhesive layer has a coefficient of static friction for a PET film of 0.05-1.0 in the case where the PET film is slid on the application tape having a size of 30 mm × 30 mm under a condition of a load of 100 g and a rate of 100 mm/min, the pressure-sensitive adhesive layer comprises an acrylic pressure-sensitive adhesive, and the application tape has a Young's modulus of 300 MPa or lower.

In the application tape according to the present invention, it is preferred that the pressure-sensitive adhesive layer comprises a pressure-sensitive adhesive comprising an acrylic copolymer obtained by copolymerizing a main monomer and a functional group-containing monomer component, in which the main monomer is at least one acrylic monomer selected from the group consisting of ethyl acrylate, butyl acrylate, methyl methacrylate, ethyl methacrylate, 2-ethylhexyl acrylate, and acrylonitrile, and the functional group-containing monomer component is acrylic acid and/or methacrylic acid, and in which at least a part of the acrylic copolymer is cross-linked.

It is preferred that the base, which is comprised in the application tape, contains at least one plasticizer selected from the group consisting of di(2-ethylhexyl) phthalate (DOP), dibutyl phthalate (DBP), and diisononyl phthalate (DINP), and the pressure-sensitive adhesive layer, which is comprised in the application tape, comprises an acrylic polymer which has been cross-linked with using at least one cross-linking agent selected from the group consisting of a melamine compound cross-linking agent, an isocyanate compound cross-linking agent, and a glycidylamine compound cross-linking agent.

The protective pressure-sensitive adhesive sheet equipped with an application tape, according to the present invention, comprises the above application tape and a protective pressure-sensitive adhesive sheet. Here, the protective pressure-sensitive adhesive sheet comprises an adhesion layer and a base layer. It is preferred that the base layer of the protective pressure-sensitive adhesive sheet comprises a urethane polymer.
In the protective pressure-sensitive adhesive sheet equipped with an application tape, according to the present invention, it is preferred that the pressure-sensitive adhesive layer comprised in the application tape has an adhesive strength lower than the adhesive strength of the adhesion layer comprised in the protective pressure-sensitive adhesive sheet.
Moreover, the protective pressure-sensitive adhesive sheet preferably has, on the outermost surface thereof, a coating layer, and the coating layer preferably comprises a fluoroethylene/vinyl ether alternating copolymer.
In the present invention, the base layer of the protective pressure-sensitive adhesive sheet preferably has, on the back surface thereof, a coating layer comprising any of a fluoropolymer, an urethane polymer, and a (meth)acrylic polymer.

The method for producing a protective pressure-sensitive adhesive sheet equipped with an application tape, according to the present invention, comprises
adding a multifunctional isocyanate to a fluoroethylene/vinyl ether alternating copolymer dissolved in a solvent, applying the resultant solution to a polyethylene terephthalate (PET) film which has been treated with a release agent, and drying the applied solution to form a coating layer,
applying a mixture of a urethane polymer and an (meth)acrylic monomer to the coating layer,
irradiating the applied mixture with ultraviolet ray to form a composite film bonded to the coating layer,
forming a adhesion layer on the composite film, and subsequently
removing the release agent-treated PET film, and laminating the application tape according to the present invention to the coating layer.

The protective pressure-sensitive adhesive sheet equipped with an application tape, according to the present invention, is preferably utilized for application to the painted outer surface of at least one member selected from the group consisting of motor vehicles, motor bicycles, trucks, boats, and aircrafts

According to the present invention, an application tape having moderate surface slip properties, moderate flexibility, and moderate adhesive strength can be realized. Furthermore, a protective pressure-sensitive adhesive sheet equipped with the application tape can be realized.

### MODES FOR CARRYING OUT THE INVENTION

The present invention will be explained below in detail.
The application tape of the present invention has a function of improving an application workability when a protective pressure-sensitive adhesive sheet is applied to an adherend. The application tape has a surface which has a coefficient of static friction for a PET film of 0.05-1.0, preferably 0.1-0.5, in the case where the PET film is slid on the application tape having a size of 30 mm × 30 mm under a condition of a load of 100 g and a rate of 100 mm/min. When the coefficient of static friction of the surface thereof is 0.05-1.0, satisfactory slip properties can be exhibited when a protective pressure-sensitive adhesive sheet is applied to an adherend using a squeegee.

It is necessary that the application tape of the present invention should have moderate flexibility. In the present invention, it is necessary that the application tape should have a Young's modulus of 300 MPa or lower. When the Young's modulus of the application tape is 300 MPa or lower, the protective pressure-sensitive adhesive sheet can exhibit satisfactory fitting properties when applied to an adherend having curved surfaces.

It is preferred in the present invention that the adhesive strength between the application tape and the protective pressure-sensitive adhesive sheet is lower than the adhesive strength between the protective pressure-sensitive adhesive sheet and the adherend to which the protective pressure-sensitive adhesive sheet is applied. When such requirement concerning adhesive strength is satisfied, the application tape can be easily removed when the tape is to be peeled off from the surface of the protective pressure-sensitive adhesive sheet which has been applied to the adherend. In addition, such application tape does not pose the problem that the protective pressure-sensitive adhesive sheet is undesirably peeled off from the adherend together with the application tape.

The application tape of the present invention preferably has a base and a pressure-sensitive adhesive layer. It is preferred that the base comprises a flexible polyvinyl chloride (hereinafter often abbreviated to "PVC") which contains a plasticizer, and the opposite surface of this base from the pressure-sensitive adhesive layer has a coefficient of static friction for a PET film of 0.05-1.0 in the case where the PET film is slid on the application tape having a size of 30 mm × 30 mm under a condition of a load of 100 g and a rate of 100 mm/min. Incidentally, the coefficient of static friction is more preferably 0.1 to 0.5.

Preferred examples of the plasticizer include di(2-ethylhexyl) phthalate (hereinafter often abbreviated to "DOP") and diisononyl phthalate (hereinafter often abbreviated to "DINP") from the standpoints of production, cost, etc. However, examples thereof further include low-molecular plasticizers such as dibutyl phthalate (hereinafter often abbreviated to "DBP") and epoxy polymer plasticizers. A combination of two or more thereof may also be used.

The amount of the plasticizer to be incorporated is, for example, preferably 10 parts by weight or more and 50 parts by weight or less, and more preferably 20 parts by weight or more and 40 parts by weight or less, per 100 parts by weight of the PVC. When the amount of the plasticizer incorporated is 10-50 parts by weight, this base is preferred from the standpoint of making the base combining elastic modulus and flexibility (fitting properties to curved surfaces) and is usable as the bases of general pressure-sensitive adhesive PVC tapes.

A lubricant can be contained in the application tape of the present invention. As the lubricant, use can be made of a fatty acid amide compound such as a methylenebis(fatty acid amide) or an ethylenebis(fatty acid amide). The amount of the lubricant to be incorporated is, for example, preferably 0.1 parts by weight or more and 5 parts by weight or less, and more preferably 0.5 parts by weight or more and 3 parts by weight or less, per 100 parts by weight of the PVC. When the amount of the lubricant incorporated is 0.1-5 parts by weight, there is an advantage that troubles such as a decrease in adhesive force and fouling are minimized while maintaining the effect of imparting surface slip properties. On the other hand, in case where the lubricant is incorporated in an amount less than 0.1 part by weigh, it is difficult to obtain the effect of the addition thereof. When the lubricant is incorporated in an amount exceeding 5 parts by weight, there are cases where the additive migrates in a large amount to the surface of the pressure-sensitive adhesive, resulting in troubles such as a decrease in adhesive force and fouling of the adherend surface.

It is preferred that the thickness of the base as a component of the application tape 50 µm or more and 200 µm or less, however, the thickness thereof should not be construed as being limited to that range. When the thickness of the base is 50 µm or more and 200 µm or less, the application tape is easy to handle from the standpoint of the rigidity of the base and this is suited to the primary purpose of the application tape, which is to impart an application workability. When the thickness of the base is 200 µm or less, excellent fitting properties to curved surfaces are obtained. From the standpoint of cost also, it is preferred to regulate the thickness of the base to 200 µm or less.

The pressure-sensitive adhesive layer as a component of the application tape preferably contains an acrylic pressure-sensitive adhesive. This acrylic pressure-sensitive adhesive contains acrylic monomers, such as acrylonitrile (AN), methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, pentyl (meth)acrylate, isopentyl (meth)acrylate, hexyl (meth)acrylate, cyclohexyl (meth)acrylate, heptyl (meth)acrylate, n-octyl (meth)acrylate, isooctyl (meth)acrylate, 2-ethylhexyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, isobornyl (meth)acrylate, and 1-adamantyl (meth)acrylate, as a main monomer component. Among these, the acrylic pressure-sensitive adhesive preferably contains at least one acrylic monomer selected from the group consisting of ethyl acrylate, the above various butyl acrylates, methyl methacrylate, ethyl methacrylate, 2-ethylhexyl acrylate, and acrylonitrile. These acrylic monomers can be used alone or in combination of two or more thereof. This acrylic pressure-sensitive adhesive may contain an acrylic copolymer (or two or more acrylic copolymers) obtained by copolymerizing a monomer component having a functional group with the main monomer component. Examples of the functional group include the carboxyl group of acrylic acid (AA), methacrylic acid (MMA), or the like and the hydroxyl group of hydroxy ethylacrylate (HEA) or the like. However, the functional group should not be construed as being limited to these examples. As the monomer component having a functional group, use may also be made of 2-hydroxyethyl (meth)acrylate, vinyl acetate, styrene, or the like. As the monomer composition having a functional group is preferably acrylic acid and/or methacrylic acid.

The acrylic copolymer comprised in the pressure-sensitive adhesive can be obtained by copolymerizing the monomer component having a functional group with the main monomer component so that the amount of the former monomer component is 0.1 parts by weight or more and 20 parts by weight or less, preferably 0.5 parts by weight or more and 15 parts by weight or less, and more preferably 1 parts by weight or more and 10 parts by weight or less, per 100 parts by weight of the main monomer component.

This acrylic copolymer can be obtained by polymerizing the acrylic monomers, etc. by emulsion polymerization, solution polymerization, or the like. With respect to the molecular weight thereof, it is preferred that the weight-average molecular weight (Mw) thereof is 200,000 or more and 1,500,000 or less. It is preferred to use an acrylic copolymer having a molecular weight within that range.

It is preferred that the pressure-sensitive adhesive to be used for forming the pressure-sensitive adhesive layer serving as a component of the application tape of the present invention contains at least one member selected from the group consisting of isocyanate compound cross-linking agents, glycidylamine compound cross-linking agents, and melamine compound cross-linking agents, besides the main polymer(s), i.e., an acrylic copolymer (or two or more acrylic copolymers). In the present invention, however, usable cross-linking agents should not be construed as being limited to those cross-linking agents, and other ingredients which can cross-link with the acrylic polymer can be suitably used.
The amounts of those cross-linking agents to be incorporated per 100 parts by weight of the acrylic copolymer may be as follows. In the case of using an isocyanate compound cross-linking agent, the amount thereof is 0.5-10 parts by weight, and preferably 1.0-5.0 parts by weight. In the case of using a glycidylamine compound cross-linking agent, the amount thereof is 0.2-2.0 parts by weight, and preferably 0.3-1.0 part by weight. In the case of using a melamine compound cross-linking agent, the amount thereof is 0.5-10 parts by weight, and preferably 0.8-5.0 parts by weight.

Examples of the isocyanate compound cross-linking agents usable in the present invention include tolylene diisocyanate (TDI), diphenylmethane diisocyanate (MDI), hexamethylene diisocyanate, and xylene diisocyanate. As these isocyanate compound cross-linking agents, for example, Coronate L (manufactured by Nippon Polyurethane Co., Ltd.) and DESMODUR-L75 (manufactured by BAYER. A.G) are commercially available as TDI, and Millionate MR-300 (manufactured by Nippon Polyurethane Co., Ltd.) is commercially available as MDI.

Preferred examples of the glycidylamine compound cross-linking agents usable in the present invention include 1,3-bis(N,N-diglycidylaminomethyl)cyclohexane (e.g., "TETRAD-C", manufactured by Mitsubishi Gas Chemical Company, is commercially available). Any glycidylamine compound which readily undergoes a chemical reaction with a functional group such as carboxyl or hydroxyl at ordinary temperature (20-30°C) can be used without particular limitations.

Preferred examples of the melamine compound cross-linking agents usable in the present invention include butanol-modified melamine-formaldehyde resins. Commercially available are "Super Beckamine J-820-60N", manufactured by Nippon Polyurethane Co., Ltd., and "Luwipal 012", manufactured by BASF.
Incidentally, usable cross-linking agents are not limited to those resins, and any cross-linking agent for use in preventing the pressure-sensitive adhesive from being plasticized by the plasticizer such as DOP, can be used.

The acrylic pressure-sensitive adhesive to be used in the pressure-sensitive adhesive layer serving as a component of the application tape can include an acrylic copolymer which has been cross-linked with at least one cross-linking agent selected from the three kinds of cross-linking agents.

The thickness of the pressure-sensitive adhesive layer in the present invention is preferably 1-30 µm, and more preferably 5-15 µm.

Various additives in common use, such as an antioxidant and an ultraviolet absorber, can be added according to need, to each of the base and pressure-sensitive adhesive layer serving as a component of the application tape, so long as the addition thereof does not lessen the effects of the present invention. These additives are used in ordinary amounts according to the kinds thereof.

The application tape of the present invention may be stored in the state of being stacked as sheets, or in the state of having been wound into a roll. For example, use may be made of a method in which the surface of the pressure-sensitive adhesive layer of the application tape is covered with a release agent-treated separator and this application tape is wound into a roll, or a method in which a separator is superposed on the surface of the pressure-sensitive adhesive layer of each of sheets of the application tape and the sheets each covered with the separator are brought into a stacked state. Alternatively, use may be made of a method in which the back surface of the base of the application tape is treated with a release agent and this application tape is formed into a roll or another shape.

Although the application tape of the present invention may be supplied as such, the application tape may also be supplied in the state of having been applied to a protective pressure-sensitive adhesive sheet to be applied in order to protect an adherend (e.g., the painted surface of the body of a motor vehicle, aircraft, etc.). Namely, the protective pressure-sensitive adhesive sheet equipped with the application tape of the present invention has a configuration in which the application tape has been applied to the back surface of the protective pressure-sensitive adhesive sheet (i.e., to the surface on the opposite side from the surface having the pressure-sensitive adhesive layer).

The protective pressure-sensitive adhesive sheet to be used in the present invention can be selected without particular limitations. However, it is preferred that the protective pressure-sensitive adhesive sheet has a given adhesive strength. Specifically, it is preferred that the adhesive strength between the protective pressure-sensitive adhesive sheet and an adherend is higher than the adhesive strength between the application tape and the protective pressure-sensitive adhesive sheet. So long as this requirement is satisfied, a protective pressure-sensitive adhesive sheet in general use can be employed.

A preferred protective pressure-sensitive adhesive sheet to be used in the present invention, for example, has a base layer and a adhesion layer, and the base layer preferably contains a film including a urethane polymer. It is preferred that this film is a composite film including a urethane polymer and a polymer different from the urethane polymer.

It is preferred that the composite film contains a (meth)acrylic polymer and a urethane polymer. The ratio of the (meth)acrylic polymer and the urethane polymer blended in the composite film is preferably such that the acrylic component/urethane component ratio is 0.25 or more and 4.00 or less by weight.

In the present invention, it is preferred that the (meth)acrylic polymer is a polymer produced from an acrylic components containing at least a (meth)acrylic acid type monomer and a monofunctional (meth)acrylic monomer.

In the present invention, the (meth)acrylic acid type monomer is a (meth)acrylic monomer having a carboxyl group, and examples thereof include acrylic acid and methacrylic acid. Acrylic acid is especially preferred in the present invention. However, use may be made of methacrylic acid or a mixture of acrylic acid and methacrylic acid, or another monomer having an acidic group may be mixed therewith. Examples of the other monomer having an acidic group include carboxyl-group-containing monomers such as carboxyethyl (meth)acrylate, carboxypentyl (meth)acrylate, itaconic acid, maleic acid, fumaric acid, crotonic acid, and isocrotonic acid, sulfonic-acid-group-containing monomers such as 2-acrylamido-2-methylpropanesulfonic acid, and phosphate-group-containing monomers such as 2-hydroxyethyl acryloylphosphate and 2-hydroxypropyl acryloylphosphate.

It is preferred that the content of the (meth)acrylic acid type monomer in the acrylic components is 1% by weight or more and 40% by weight or less.
In the present invention, the term "film" means a conception which includes sheet, while the term "sheet" means a conception which includes film. Furthermore, the expression "(meth)acrylic" as in "(meth)acrylic polymer" and "(meth)acrylic acid type monomer" in the present invention means a conception which includes both "methacrylic" and "acrylic". In addition, even when "acrylic" is used, this expression means a conception including "methacrylic" unless this conception is problematic from a commonsense standpoint.

Examples of the monofunctional (meth)acrylic monomer to be used in the present invention include: methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, pentyl (meth)acrylate, isopentyl (meth)acrylate, hexyl (meth)acrylate, cyclohexyl (meth)acrylate, heptyl (meth)acrylate, n-octyl (meth)acrylate, isooctyl (meth)acrylate, 2-ethylhexyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, isobornyl (meth)acrylate, and 1-adamantyl (meth)acrylate; and acryloylmorpholine, isobornyl acrylate, and dicyclopentanyl acrylate. These monofunctional (meth)acrylic monomers may be used alone or in combination of two or more thereof. The monofunctional (meth)acrylic monomer to be used in the present invention may be a hydroxyl-group-containing (meth)acrylic monomer. Examples of the hydroxyl-group-containing (meth)acrylic monomer include 2-hydroxyethyl acrylate, 2-hydroxyethyl methacrylate, 4-hydroxybutyl acrylate, 4-hydroxybutyl methacrylate, 1,4-cyclohexanedimethanol monoacrylate, 1,4-cyclohexanedimethanol monomethacrylate, 2-hydroxypropyl acrylate, 2-hydroxypropyl methacrylate, and pentaerythritol acrylate. These hydroxyl-group-containing (meth)acrylic monomers may be used alone, or two or more thereof may be used.

The content of the monofunctional (meth)acrylic monomer in the acrylic components is more preferably 20 by weight or more and 99% by weight or less.

Urethane polymer can be obtained by reaction of a polyol with a polyisocyanate. For the reaction between the hydroxyl groups of a diol and an isocyanate, a catalyst is generally used. According to the present invention, however, the reaction can be accelerated even when a catalyst which imposes an environmental burden, such as dibutyltin dilaurate or tin octoate, is not used.

Examples of the polyol to be used in the present invention include high-molecular diols and low-molecular diols, such as ethylenediol, 1,4-butylenediol, 1,6-hexanediol, 1,12-dodecanediol, neopentyldiol, 3-methyl-1,5-pentanediol, diethylenediol, poly(oxypropylene)diol, poly(oxytetramethylene)diol, aliphatic polyester polyols (condensates of an aliphatic diol with an aliphatic dibasic acid; examples of the aliphatic diol include ethylenediol, 1,4-butylenediol, 1,6-hexanediol, neopentyldiol, 3-methyl-1,5-pentanediol, and diethylenediol, and examples of the aliphatic dibasic acid include succinic acid, adipic acid, sebacic acid, and decamethylenedicarboxylic acid), polycaprolactone polyols, and polycarbonate polyols (adducts of an aliphatic diol with ethylene carbonate, condensates of an aliphatic diol with dimethyl carbonate, and condensates of an aliphatic diol with diethyl carbonate; examples of the aliphatic diols include ethylenediol, 1,4-butylenediol, 1,6-hexanediol, neopentyldiol, 3-methyl-1,5-pentanediol, and diethylenediol). One or more of these diols may be used. It is preferable in the present invention to use a poly(oxytetramethylene)diol (PTMG) as the polyol.

In the present invention, the urethane polymer preferably contains no cross-linked structure. It is preferred that the polyol to be used for forming the urethane polymer is a linear polyol. However, the polyol may be a polyol having one or more side chains or a polyol including a branched structure, so long as these polyols satisfy the requirement that a cross-linked structure is not formed in the urethane polymer. Namely, the urethane polymer contained as a component in the composite film in the present invention is a urethane polymer having no cross-linked structure and, hence, is utterly different in structure from the Interpenetrating Polymer Network (IPN) structure.

Examples of the polyisocyanate to be used in the present invention include aromatic, aliphatic, and alicyclic diisocyanates and the dimers, trimers, and higher multimers of these diisocyanates. Examples of the aromatic, aliphatic, and alicyclic diisocyanates include tolylene diisocyanate (TDI), diphenylmethane diisocyanate (MDI), xylylene diisocyanate (XDI), naphthylene diisocyanate (NDI), phenylene diisocyanate (PPDI), m-tetramethylxylylene diisocyanate (TMXDI), methylcyclohexane diisocyanate (hydrogenated TDI), dicyclohexylmethane diisocyanate (hydrogenated MDI), cyclohexane diisocyanate (hydrogenated PPDI),
bis(isocyanatomethyl)cyclohexane (hydrogenated XDI), norbornene diisocyanate (NBDI), isophorone diisocyanate (IPDI), hexamethylene diisocyanate (HDI), butane diisocyanate, 2,4-trimethylhexamethylene diisocyanate, 2,4,4-trimethylhexamethylene diisocyanate, ethylene diisocyanate, and tetramethylene diisocyanate. These diisocyanates can be used alone or in combination. Furthermore, the dimers and trimers of those diisocyanates, or polyphenylmethane diisocyanates are used. Examples of the trimers include the isocyanurate type, biuret type, and allophanate type, and these isocyanate compounds can be suitably used.

It is preferred in the present invention that the urethane polymer is formed using at least one diisocyanate selected from the group consisting of hexamethylene diisocyanate (HDI), hydrogenated tolylene diisocyanate (HTDI), hydrogenated 4,4-diphenylmethane diisocyanate (HMDI), isophorone diisocyanate (IPDI), and hydrogenated xylene diisocyanate (HXDI). Especially preferred is hydrogenated xylene diisocyanate.

In the present invention, it is preferred that the amounts of the polyol component and polyisocyanate component to be used for forming the urethane polymer are such that the NCO/OH (equivalent ratio) is 1.1 or more and 2.0 or less.

Additives in common use, such as an ultraviolet absorber, antioxidant, filler, pigment, colorant, flame retardant, antistatic agent, and light stabilizer, can be added according to need to the composite film so long as the addition thereof does not lessen the effects of the present invention. These additives are used in ordinary amounts according to the kinds thereof.

A small amount of a solvent may be added in the present invention in order to regulate the viscosity of the coating fluid at the formation of the composite film. The solvent can be suitably selected from solvents in common use. Examples thereof include ethyl acetate, toluene, chloroform, and dimethylformamide.

In the present invention, the composite film can be formed, for example, by forming a urethane polymer by the reaction of a diol with a diisocyanate in an acrylic monomer as a diluent, applying the mixture containing the acrylic monomer and the urethane polymer as main components to a temporary base (which has been treated with a release agent according to need) or to the coating layer which will be described later or other substrate, irradiating the applied mixture with radiation, e.g., ionizing radiation such as α rays, β rays, γ rays, neutron beams, or electron beams, ultraviolet rays, or visible light, etc. according to the kind of the photopolymerization initiator, etc. to cure the mixture, and then removing the temporary base or the like according to need. In this operation, a release agent-treated sheet (separator or the like) may be placed on the applied mixture to block oxygen in order to avoid polymerization inhibition caused by oxygen. Conditions for the reaction for forming the mixture of an acrylic monomer and a urethane polymer can be suitably set. For example, however, the inner-bath temperature can be 20°C or higher and 90°C or lower, and the reaction time can be 1 hours or longer and 48 hours or shorter.

The amount of the radiation of light such as ultraviolet rays with which the applied mixture is to be irradiated can be set according to the required film properties. In general, however, the amount of ultraviolet rays for irradiation is 100-5,000 mJ/cm².

The mixture including the urethane polymer and the acrylic monomer as main components contains a photopolymerization initiator. The photopolymerization initiator is not particularly limited. For example, use can be made of a ketal photopolymerization initiator, α-hydroxyketone photopolymerization initiator, α-aminoketone photopolymerization initiator, acylphosphine oxide photopolymerization initiator, benzophenone photopolymerization initiator, thioxanthone photopolymerization initiator, benzoin ether photopolymerization initiator, acetophenone photopolymerization initiator, aromatic sulfonyl chloride photopolymerization initiator, photoactive oxime photopolymerization initiator, benzoin photopolymerization initiator, benzyl photopolymerization initiator, or the like.

The thickness of the base layer as a component of the protective pressure-sensitive adhesive sheet according to the present invention is not particularly limited and can be suitably selected in accordance with the purpose, etc., for example, in accordance with the kind and location of the object to be covered and protected. However, the thickness thereof is preferably 50 µm or more, more preferably 100 µm or more, and especially preferably 150 µm or more. The upper limit of the thickness thereof is preferably about 1 mm, more preferably 500 µm or less, and especially preferably 400 µm or less.

It is preferred that the protective pressure-sensitive adhesive sheet to be used in the present invention has a coating layer on the back surface of the base layer. It is preferred that the coating layer contains any of a fluoropolymer, a urethane polymer, and a (meth)acrylic polymer. The coating layer preferably is a layer formed using a fluoroethylene/vinyl ether alternating polymer in which a fluoroethylene unit and a vinyl ether unit have been arranged alternately. The thickness of the coating layer is preferably 2-50 µm, and especially preferably 5-30 µm.
It is preferred that the coating layer and the base layer is in the state of having been bonded to each other. For attaining such bonded state, it is necessary that a fluoroethylene/vinyl ether alternating polymer is used for the coating layer and the above-mentioned components for the composite film are used for the base layer. So long as the two layers are in such bonded state, the coating layer can retain excellent adhesion to the base layer and, hence, is not undesirably peeled off from the base layer when the application tape is peeled off.

In one embodiment of the present invention, a fluoroethylene/vinyl ether alternating polymer is dissolved in a solvent, and a multifunctional isocyanate is added thereto to prepare a coating fluid for coating layer formation. This solution is used to form a coating layer. For example, this coating fluid for coating layer formation is applied to a release agent-treated polyethylene film or polyethylene terephthalate (PET) film, and then dried to form a coating layer. A mixture containing a urethane polymer (coating fluid for composite film formation) is applied on the coating layer and irradiated with ultraviolet rays or the like. Thus, a coating layer/composite film multilayer structure can be obtained. Thereafter, a protective pressure-sensitive adhesive sheet equipped with an application tape can be prepared by removing the release agent-treated polyethylene film or polyethylene terephthalate (PET) film from the multilayer structure and laminating the application tape according to the present invention on the coating layer.

Alternatively, use may be made of a method in which, after the reaction of a hydroxyl-containing monomer with a multifunctional isocyanate, a fluoroethylene/vinyl ether alternating polymer is added thereto, and the resultant solution is used to form a coating layer. For example, this resultant solution is applied to a release agent-treated PET film and then dried to form a coating layer. The coating fluid for composite film formation which contains a urethane polymer is applied on the coating layer and irradiated with ultraviolet rays or the like to cure the coating fluid for composite film formation. Thus, a coating layer/composite film multilayer structure can be obtained. Thereafter, a protective pressure-sensitive adhesive sheet equipped with an application tape can be prepared by removing the release agent-treated PET film from the multilayer structure and laminating the application tape according to the present invention on the coating layer.

The multifunctional isocyanate is a compound having two or more isocyanate groups in the molecule. Examples of the multifunctional isocyanate include bifunctional isocyanates such as hydrogenated xylylene diisocyanate, hexamethylene diisocyanate, isophorone diisocyanate, hydrogenated diphenylmethane diisocyanate, ethylene diisocyanate, 1,4-tetramethylene diisocyanate, trimethylhexamethylene diisocyanate, and norbornene diisocyanate; and trifunctional isocyanates such as DESMODUR N3200 (manufactured by Sumitomo Bayer Urethane Co., Ltd.), Coronate L (manufactured by Nippon Polyurethane Co., Ltd.), Coronate HL (manufactured by Nippon Polyurethane Co., Ltd.), Coronate HX (manufactured by Nippon Polyurethane Co., Ltd.), Takenate D-140N (manufactured by Mitsui Chemicals Polyurethanes, Inc.), Takenate D-127 (manufactured by Mitsui Chemicals Polyurethanes, Inc.), and Takenate D-110N (manufactured by Mitsui Chemicals Polyurethanes, Inc.). In the present invention, these multifunctional isocyanates can be used alone or in combination of two or more thereof.

In the case where the base layer has a coating layer possessed on one surface thereof, the adhesion layer as a component of the protective pressure-sensitive adhesive sheet is formed on the opposite side surface of the base layer from the coating layer. The pressure-sensitive adhesive forming this adhesion layer is not particularly limited, and use can be made of a general pressure-sensitive adhesive such as an acrylic, rubber-based, or silicone-type pressure-sensitive adhesive. However, an acrylic pressure-sensitive adhesive is preferred when taking into account low-temperature adhesive properties, high-temperature holding properties, andcost, etc.

As the acrylic pressure-sensitive adhesive, use can be made of an acrylic pressure-sensitive adhesive containing an acrylic copolymer (or two or more acrylic copolymers) obtained by copolymerizing a monomer component consisting mainly of one or more acrylic esters with a monomer component having one or more functional groups such as carboxyl group and hydroxyl group.

Examples of the acrylic esters include methyl (meth)acrylate, ethyl (meth)acrylate, n-propyl (meth)acrylate, isopropyl (meth)acrylate, n-butyl (meth)acrylate, isobutyl (meth)acrylate, sec-butyl (meth)acrylate, t-butyl (meth)acrylate, pentyl (meth)acrylate, isopentyl (meth)acrylate, hexyl (meth)acrylate, cyclohexyl (meth)acrylate, heptyl (meth)acrylate, n-octyl (meth)acrylate, isooctyl (meth)acrylate, 2-ethylhexyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, isobornyl (meth)acrylate, and 1-adamantyl (meth)acrylate. One or more of these alkyl (meth)acrylates can be used.

The following monomer components can be copolymerized with the alkyl (meth)acrylates. Examples of copolymerizable monomer components include: carboxyl group-containing monomers such as (meth)acrylic acid, itaconic acid, maleic acid, crotonic acid, fumaric acid, carboxyethyl (meth)acrylate, and carboxypentyl (meth)acrylate; hydroxyl group-containing monomers such as 2-hydroxyethyl (meth)acrylate, 3-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, and (4-hydroxymethylcyclohexyl)methyl acrylate; glycidyl group-containing monomers such as glycidyl (meth)acrylate and methylglycidyl (meth)acrylate; cyanoacrylate type monomers such as acrylonitrile and methacrylonitrile; nitrogen-containing monomers such as N,N-dimethylaminoethyl (meth)acrylate, N,N-dimethylaminopropyl(meth)acrylamide, N,N-dimethyl(meth)acrylamide, N,N-diethyl(meth)acrylamide, N-isopropyl(meth)acrylamide, N-hydroxyethyl(meth)acrylamide, (meth)acryloylmorpholine, N-vinyl-2-piperidone, N-vinyl-3-morpholinone, N-vinyl-2-caprolactam, N-vinyl-2-pyrrolidone, N-vinyl-1,3-oxazin-2-one, N-vinyl-3,5-morpholinedione, N-cyclohexylmaleimide, N-phenylmaleimide, N-acryloylpyrrolidine, and t-butylaminoethyl (meth)acrylate; styrene and styrene derivatives; and other monomers including vinyl acetate. One or more of these monomers can be copolymerized with (meth)acrylic esters according to need.

It is preferred that the pressure-sensitive adhesive to be used in the present invention includes a copolymer obtained from monomer components containing at least one member selected from the group consisting of 2-ethylhexyl acrylate and isononyl acrylate and at least one carboxyl-containing monomer selected from the group consisting of acrylic acid and methacrylic acid. Namely, as the pressure-sensitive adhesive to be used in the present invention, use can be made of a copolymer obtained by copolymerizing 2-ethylhexyl acrylate, isononyl acrylate, or the like as the main monomer with a carboxyl-containing monomer such as acrylic acid or methacrylic acid.

There are no particular limitations on the thickness of the adhesion layer, and the thickness thereof can be set at will. However, the thickness thereof is usually preferably 20 µm or more, more preferably 30 µm or more, and especially preferably 40 µm or more. The upper limit thereof is usually preferably about 1,000 µm.

In the present invention, the adhesion layer can be formed, for example, by a method in which a solvent-based or emulsion-type pressure-sensitive adhesive is directly applied to the base layer or another substrate and dried, or by a method in which such a pressure-sensitive adhesive is applied to a release paper to form a layer of the pressure-sensitive adhesive beforehand and this layer is laminated to the base layer or another substrate. Also usable is a method in which a pressure-sensitive adhesive of the radiation-curable type is applied to the base layer, and both the layer of the pressure-sensitive adhesive and the film are irradiated with radiation to thereby simultaneously cure the multilayer sheet and the layer of the pressure-sensitive adhesive.

In the case where the protective pressure-sensitive adhesive sheet is for use in paint film protection or the like, it is preferred that this protective pressure-sensitive adhesive sheet is transparent from the standpoint of enabling the color, etc. of the painted surface of the adherend to be reflected as such by the appearance.

The protective pressure-sensitive adhesive sheet can combine high strength and high breaking elongation and has excellent flexibility for application to curved surfaces. Furthermore, the protective pressure-sensitive adhesive sheet is excellent in properties such as antifouling properties, weathering performance, heat resistance, chemical resistance, and transparency.

The application tape of the present invention improves the application workability of a protective pressure-sensitive adhesive sheet and effectively functions to facilitate positioning in the application. Furthermore, since the application tape has moderate slip properties, the protective pressure-sensitive adhesive sheet can be applied without damaging the protective pressure-sensitive adhesive sheet and without posing a problem concerning appearance, e.g., creasing. In addition, since the application tape has moderate adhesive strength, the application tape can be easily peeled off after use.
The protective pressure-sensitive adhesive sheet equipped with the application tape of the present invention is highly superior in the application workability of the protective pressure-sensitive adhesive sheet, which is for protecting the painted surface of a transportation machinery, e.g., a motor bicycle, bicycle, railway vehicle, ship, snowmobile, gondola, lift, escalator, motor vehicle, truck, boat, or aircraft, in particular, a motor vehicle, aircraft, motor bicycle, truck, boat, or the like, and is suitable for use in such application.

### EXAMPLES

The present invention will be explained below in detail by reference to Examples, but the present invention should not be construed as being limited to the following Examples. In the following Examples, "parts" and "%" are by weight unless otherwise indicated. The measurement methods and evaluation methods used in the following Examples are shown below.

### (Measurement Methods and Evaluation Methods)

Test samples to be subjected to the evaluation of each Example were produced in the following manner.
The protective pressure-sensitive adhesive sheet obtained was cut into a size of 100 mm × 200 mm. The application tape obtained was cut into a size of 150 mm × 250 mm, and the coating layer surface of the protective pressure-sensitive adhesive sheet was laminated to the central part of the application tape to obtain a test sample. With respect to the Comparative Example, in which the protective pressure-sensitive adhesive sheet was not equipped with an application tape, the protective pressure-sensitive adhesive sheet alone was cut into that size to obtain a test sample.

(1) Fouling of Protective Pressure-Sensitive Adhesive Sheet
A test sample was applied to the painted surface of a rear door of a motor vehicle using a spatula made of polypropylene (PP) wrapped in a cloth. In the case where the protective pressure-sensitive adhesive sheet was equipped with an application tape, the application tape was removed. The surface of the protective pressure-sensitive adhesive sheet was visually examined. The protective sheet was evaluated on the basis of the criteria shown below.
Criteria:
"A" The protective pressure-sensitive adhesive sheet is completely free from adhesion of soils including fingerprints thereto.
"B" Soils including fingerprints are observed on the protective pressure-sensitive adhesive sheet.

(2) Surface Scratches of Protective Pressure-Sensitive Adhesive Sheet
A test sample was applied to the painted surface of a rear door of a motor vehicle using a spatula made of polypropylene (PP) wrapped in a cloth. In the case where the protective pressure-sensitive adhesive sheet was equipped with an application tape, the application tape was removed. The surface of the protective pressure-sensitive adhesive sheet was visually examined. The protective sheet was evaluated on the basis of the criteria shown below.
Criteria:
"A" No scratches due to the spatula or the like are observed in the surface of the protective pressure-sensitive adhesive sheet.
"B" Scratches due to the spatula or the like are observed in the surface of the protective pressure-sensitive adhesive sheet.

(3) Surface Slip Property during Application
A test sample was applied to the painted surface of a rear door of a motor vehicle using a spatula made of polypropylene (PP) wrapped in a cloth. The test sample was evaluated for surface slip property during the application, on the basis of the following criteria.
Criteria:
"A" The spatula slipped smoothly on the surface of the test sample and the application was easy.
"B" No problem arose in the application although the slippage of the spatula on the surface of the test sample was not highly smooth.
"C" The spatula did not slip smoothly on the surface of the test sample and the application was difficult.

(4) Fitting Properties to Curved Surface
A test sample was applied to the painted surface of a rear door of a motor vehicle using a spatula made of polypropylene (PP) wrapped in a cloth. In the case where the protective pressure-sensitive adhesive sheet was equipped with an application tape, the application tape was removed. The protective pressure-sensitive adhesive sheet was visually examined. The protective sheet was evaluated on the basis of the criteria shown below.
Criteria:
"A" The protective pressure-sensitive adhesive sheet had been applied in the state of fitting tightly to the curved surface of the door.
"B" The protective pressure-sensitive adhesive sheet had creased or air bubbles had been trapped; the application was defective.

(5) Peeling Ability of Application Tape
A test sample was applied to the painted surface of a rear door of a motor vehicle using a spatula made of polypropylene (PP) wrapped in a cloth. Thereafter, the application tape was peeled off and evaluated for the peeling ability on the basis of the criteria shown below.
Criteria:
"A" The application tape only was able to be easily peeled off.
"B" The protective pressure-sensitive adhesive sheet undesirably peeled off together with the application tape.

(6) Lifting of Protective Pressure-Sensitive Adhesive Sheet from Adherend upon Removal of Application Tape
A test sample was applied to the painted surface of a rear door of a motor vehicle using a spatula made of polypropylene (PP) wrapped in a cloth. The application tape was peeled off, and the state of the protective pressure-sensitive adhesive sheet was examined. The case in which the removal of the application tape resulted in lifting of the protective pressure-sensitive adhesive sheet from the adherent is indicated by "occurred", and the case in which the removal thereof did not result in lifting of the protective pressure-sensitive adhesive sheet at all is indicated by "not occurred".

(7) Positional Shifting of Protective Pressure-Sensitive Adhesive Sheet
A rectangular frame of 100 mm × 200 mm and another rectangular frame of 150 mm × 250 mm, which surrounded the former frame so that the former frame was centered in the latter, were drawn with a magic marker on the painted surface of a rear door of a motor vehicle. Subsequently, a test sample was applied to the area within the inner frame using a spatula made of polypropylene (PP) wrapped in a cloth. In the case where the protective pressure-sensitive adhesive sheet was equipped with an application tape, the application tape was removed. The protective pressure-sensitive adhesive sheet applied to the adherend was examined for positional shifting. The protective sheet was evaluated on the basis of the criteria shown below.
Criteria:
"A" The protective pressure-sensitive adhesive sheet was able to be precisely applied to the area within the frame without causing positional shifting.
"B" Slight positional shifting (about 1.0-2.0 mm) occurred, but the shifting was not problematic.
"C" Considerable positional shifting (about 5.0 mm or more) occurred.

(8) Creasing upon 180° Bending
A test sample having a size of 100 mm × 100 mm was kept being bent for 5 seconds along a diagonal line. Thereafter, the protective pressure-sensitive adhesive sheet was evaluated as to whether the sheet had creased or not, on the basis of the following criteria. With respect to the criteria, the case in which a crease was observed in the protective pressure-sensitive adhesive sheet after removal of the application tape is indicated by "occurred", and the case in which no crease was observed in the protective pressure-sensitive adhesive sheet is indicated by "not occurred".

(9) Adhesive Strength
A test sample was applied to the painted surface (surface coated with an acrylic paint (metallic black) of the acid/epoxy cross-linking type) of a rear door of a motor vehicle by press-bonding the sample to the surface by rolling a 2-kg roller forward and backward once on the sample. At the time when 1 hour had passed therefrom, the adhesive strength between the application tape and the protective pressure-sensitive adhesive sheet and the adhesive strength between the protective pressure-sensitive adhesive sheet and the adherend were measured under the conditions of a test piece width of 10 mm, peel angle of 180°, and pulling rate of 300 mm/min.

### (EXAMPLE 1)

### <<Production of Application Tape>>

A film (70-µm thick) constituted of a flexible polyvinyl chloride resin containing 100 parts of a vinyl chloride resin (degree of polymerization (P) = 1,050) and 27 parts of di(2-ethylhexyl) phthalate (DOP) was obtained as a base.

A silicone resin in toluene as a solvent was applied to one surface of the film obtained, and was then dried at 150°C for 1 minute to obtain a back-surface release agent-treated layer of 0.1 g/m².

An acrylic pressure-sensitive adhesive was produced using 100 parts of an acrylic copolymer (BA/AN/AA = 85 parts/15 parts/2.5 parts) (Mw = 800,000), 10 parts of a butanol-modified melamine-formaldehyde resin ("Super Beckamine J-820-60N", manufactured by Nippon Polyurethane Co., Ltd.) as a cross-linking agent, and 60 parts of di(2-ethylhexyl) phthalate (DOP). This acrylic pressure-sensitive adhesive was dissolved in toluene to prepare a pressure-sensitive adhesive solution. This pressure-sensitive adhesive solution was applied to the other surface (the surface not coated with the silicone resin) of the base and dried at 130°C for 90 seconds to form a pressure-sensitive adhesive layer having a thickness of 10 µm on the base. Thus, an application tape was obtained.

### <<Production of Coating Fluid for Composite Film Formation>>

Into a reaction vessel equipped with a condenser, thermometer, and stirrer were introduced 10 parts of acrylic acid (AA), 20 parts of isobornyl acrylate (IBXA), and 20 parts of n-butyl acrylate (BA) as acrylic monomers, and 36.4 parts of polyoxytetramethylene glycol (PTMG) (number-average molecular weight, 650; manufactured by Mitsubishi Chemical Corp.) as a polyol. While the contents were being stirred, 13.6 parts of hydrogenated xylylene diisocyanate (HXDI) was added dropwise thereto and the resultant mixture was reacted at 65°C for 10 hours. Thus, a urethane polymer/acrylic monomer mixture was obtained.

Thereafter, 0.3 parts of phenylbis(2,4,6-trimethylbenzoyl)phosphine oxide ("IRGACURE 819", manufactured by Ciba Japan K.K.) as a photopolymerization initiator; 1.25 parts of an ultraviolet absorber composed of 1-methoxy-2-propanol and a product of reaction between 2-(2,4-dihydroxyphenyl)-4,6-bis(2,4-dimethylphenyl)-1,3,5-triazine and mono(C=₁₀₋₁₆(mainly C₁₂₋₁₃)alkoxy)methyl)oxirane derivatives ("TINUVIN 400", manufactured by Ciba Japan K.K.); and 1.25 parts of a product of reaction among bis(2,2,6,6-tetramethyl-1-(octyloxy)-4-piperidinyl) ester of decanedioic acid, 1,1-dimethylethyl hydroperoxide, and octane ("TINUVIN 123", manufactured by Ciba Japan K.K.) as a light stabilizer were added to the mixture to obtain a urethane polymer/acrylic monomer mixture (coating fluid for composite film formation). The amounts of the polyisocyanate component and polyol component used were such that the NCO/OH (equivalent ratio) was 1.25.

### «Production of Coating Fluid for Coating Layer Formation»

A 0.7 parts of 4-hydroxybutyl acrylate ("4HBA", manufactured by Nippon Kasei Chemical Co., Ltd.) was mixed with 11.2 parts of an isocyanate compound cross-linking agent ("Coronate HX", manufactured by Nippon Polyurethane Co., Ltd.), and the mixture was reacted for 12 hours to obtain a reaction liquid. The reaction liquid obtained (11.9 parts) was added as a curing agent to 100 parts of a 50% solution of a fluoroethylene/vinyl ether copolymer in xylene and toluene ("LF600", manufactured by Asahi Glass Co., Ltd.). Thereto was added 3.5 parts of dibutyltin laurate ("OL1", manufactured by Tokyo Fine Chemical Co., Ltd.) diluted by xylene (solid concentration, 0.01 %) as a catalyst. Furthermore, 110 parts of toluene was added as a diluent solvent. Thus, a coating fluid for coating layer formation was produced.

### «Production of Protective Pressure-Sensitive Adhesive Sheet equipped with Application Tape»

The coating fluid for coating layer formation obtained above was applied to a release agent-treated polyethylene terephthalate film (thickness, 75 µm) as a temporary base 1, and was then dried and cured at a temperature of 140°C for 3 minutes to form a fluoroethylene/vinyl ether copolymer layer. This coating layer had a thickness of 10 µm.

The coating fluid for composite film formation produced above was applied on the coating layer in such an amount as to result in a thickness after cure of 300 µm (the total thickness including the thickness of the coating layer being 310 µm). A release agent-treated polyethylene terephthalate (PET) film was superposed thereon as a separator. The surface of this PET film was irradiated with ultraviolet rays (irradiance, 290 mW/cm²; quantity of light, 4,600 mJ/cm²) using a metal halide lamp to cure the coating fluid applied. Thus, the coating layer and a composite film were formed on the temporary base 1.

An acrylic pressure-sensitive adhesive obtained using 2-ethylhexyl acrylate as a main monomer was used to form a adhesion layer on a polyethylene terephthalate film beforehand.
The adhesion layer which had been formed beforehand was superposed on the surface of the composite film formed above. Thus, a protective pressure-sensitive adhesive sheet was produced.

Subsequently, the temporary base 1 was removed from the protective pressure-sensitive adhesive sheet, and the application tape was laminated to the protective sheet so that the pressure-sensitive adhesive layer of the application tape overlay the coating layer. Thus, a protective pressure-sensitive adhesive sheet equipped with an application tape was produced.
The protective pressure-sensitive adhesive sheet equipped with an application tape thus obtained was examined and evaluated with respect to the properties (1) to (9) described above. The results thereof are shown in Table 1.

Furthermore, the protective pressure-sensitive adhesive sheet equipped with an application tape was applied to a white painted plate (manufactured by Nippon Testpanel Co., Ltd.; dull steel plate (JIS-G3141-2009) coated with baked white acrylic paint) by press-bonding the protective pressure-sensitive adhesive sheet to the white painted plate by rolling a 2-kg roller forward and backward once on the sheet. Thereafter, the coefficient of static friction of the surface of the base was measured in the following manner. A test piece having a shape of 30 mm ×30 mm obtained by bonding a PET film ("Lumirror S10" manufactured by TORAY INDUSTRIES, INC.) having a thickness of 50 µm as a mating material to an SUS304 sliding piece having a weight of 100 g with a double-coated pressure-sensitive adhesive tape (No. 5000N) manufactured by Nitto Denko Corp. was slid on the surface of the base of the application tape at a test rate of 100 mm/min to measure the coefficient of static friction. The coefficient of static friction of the base surface was 0.40.
Further, a test piece having a width of 25 mm was cut out from the protective pressure-sensitive adhesive sheet, and the test piece was pulled with a tensile test machine under a condition of pulling rate of 300 mm/min and distance between chucks of 100 mm. A Young's modulus of the test piece was obtained from the tangent of the upstroke part of stress in the obtained S-S curve. The Young's modulus was 250 MPa.

### (EXAMPLE 2)

An application tape was produced in the same manner as in Example 1, except that the thickness of the base was changed from 70 µm to 110 µm.

Specifically, a film (110-µm thick) constituted of a flexible polyvinyl chloride resin containing 100 parts of a vinyl chloride resin (degree of polymerization (P) = 1,050) and 27 parts of di(2-ethylhexyl) phthalate (DOP) was obtained as a base. A silicone resin in toluene as a solvent was applied to one surface of the film obtained, and was then dried at 150°C for 1 minute to obtain a back-surface release agent-treated layer of 0.1 g/m².

A pressure-sensitive adhesive layer was subsequently superposed in the same manner as in Example 1. Specifically, a pressure-sensitive adhesive was produced by blending 100 parts of an acrylic copolymer (BA/AN/AA = 85 parts/15 5 parts/2.5 parts) (Mw = 800,000) with 10 parts of a butanol-modified melamine-formaldehyde resin (Super Beckamine J-820-60N, manufactured by Nippon Polyurethane Co., Ltd.) as a cross-linking agent and 60 parts of di(2-ethylhexyl) phthalate (DOP). This acrylic pressure-sensitive adhesive was dissolved in toluene to prepare a pressure-sensitive adhesive solution. This pressure-sensitive adhesive solution was applied to the other surface of the base and dried at 130°C for 90 seconds to form a pressure-sensitive adhesive layer having a thickness of 10 µm on the base. Thus, an application tape was obtained.

The application tape obtained was used to produce a protective pressure-sensitive adhesive sheet equipped with an application tape, in the same manner as in Example 1. The protective pressure-sensitive adhesive sheet equipped with an application tape thus obtained was subjected to the same evaluation as in Example 1. The results thereof are shown in Table 1.
The coefficient of static friction of the surface of the base of the application tape obtained was measured in the same manner as in Example 1. As a result, the coefficient of static friction thereof was 0.44. Furthermore, the application tape had a Young's modulus of 230 MPa.

### (EXAMPLE 3)

An application tape was produced in the same manner as in Example 1, except that the pressure-sensitive adhesive layer was changed as shown below.
Specifically, a film (70-µm thick) constituted of a flexible polyvinyl chloride resin containing 100 parts of a vinyl chloride resin (degree of polymerization (P) = 1,050) and 27 parts of di(2-ethylhexyl) phthalate (DOP) was obtained as a base.
A silicone resin solution in toluene as a solvent was applied to one surface of the film obtained, and was then dried at 150°C for 1 minute to obtain a back-surface release agent-treated layer of 0.1 g/m².

A pressure-sensitive adhesive was produced by blending 100 parts of an acrylic copolymer (BA/AN/AA = 85 parts/15 parts/2.5 parts) (Mw = 800,000) with 2 parts of tolylene diisocyanate trimethylolpropane (Coronate L, manufactured by Nippon Polyurethane Co., Ltd.) as an isocyanate compound cross-linking agent, 3 parts of a butanol-modified melamine-formaldehyde resin (Super Beckamine J-820-60N, manufactured by Nippon Polyurethane Co., Ltd.) as a melamine compound cross-linking agent, and 60 parts of di(2-ethylhexyl phthalate) (DOP). This acrylic pressure-sensitive adhesive was dissolved in toluene to prepare a pressure-sensitive adhesive solution. This pressure-sensitive adhesive solution was applied to the other surface of the base and dried at 130°C for 90 seconds to form a pressure-sensitive adhesive layer having a thickness of 10 µm on the base. Thus, an application tape was obtained.

The application tape obtained was used to produce a protective pressure-sensitive adhesive sheet equipped with an application tape, in the same manner as in Example 1. The protective pressure-sensitive adhesive sheet equipped with an application tape thus obtained was subjected to the same evaluation as in Example 1. The results thereof are shown in Table 1.
The coefficient of static friction of the surface of the application tape obtained was measured in the same manner as in Example 1. As a result, the coefficient of static friction thereof was 0.23. Furthermore, the application tape had a Young's modulus of 240 MPa.

### (EXAMPLE 4)

An application tape was produced in the same manner as in Example 1, except that the base was changed as shown below.

Specifically, a film (70-µm thick) constituted of a flexible polyvinyl chloride resin containing 100 parts of a vinyl chloride resin (degree of polymerization (P) = 1,050), 26 parts of di(2-ethylhexyl) phthalate (DOP), and 1.5 parts of a methylenebis(fatty acid amide) as a lubricant was obtained as a base. A silicone resin in toluene as a solvent was applied to one surface of the film obtained, and was then dried at 150°C for 1 minute to obtain a back-surface release agent-treated layer of 0.1 g/m².

A pressure-sensitive adhesive layer was subsequently superposed in the same manner as in Example 1. Specifically, a pressure-sensitive adhesive was produced by blending 100 parts of an acrylic copolymer (BA/AN/AA = 85 parts/15 parts/2.5 parts) (Mw = 800,000) with 10 parts of a butanol-modified melamine-formaldehyde resin (Super Beckamine J-820-60N, manufactured by Nippon Polyurethane Co., Ltd.) as a cross-linking agent and 60 parts of di(2-ethylhexyl) phthalate (DOP). This acrylic pressure-sensitive adhesive was dissolved in toluene to prepare a pressure-sensitive adhesive solution. This pressure-sensitive adhesive solution was applied to the other surface of the base and dried at 130°C for 90 seconds to form a pressure-sensitive adhesive layer having a thickness of 10 µm on the base. Thus, an application tape was obtained.

The application tape obtained was used to produce a protective pressure-sensitive adhesive sheet equipped with an application tape, in the same manner as in Example 1. The protective pressure-sensitive adhesive sheet equipped with an application tape thus obtained was subjected to the same evaluation as in Example 1. The results thereof are shown in Table 1.
The coefficient of static friction of the surface of the base of the application tape obtained was measured in the same manner as in Example 1. As a result, the coefficient of static friction thereof was 0.51. Furthermore, the application tape had a Young's modulus of 180 MPa.

### (COMPARATIVE EXAMPLE 1)

A protective pressure-sensitive adhesive sheet was produced in the same manner as in Example 1, except that an application tape was not produced. Namely, a protective pressure-sensitive adhesive sheet in the state of having no application tape applied thereto was obtained. The protective pressure-sensitive adhesive sheet obtained was subjected to the same evaluation as in Example 1. The results thereof are shown in Table 1.

**[Table 1]**

| Evaluation items | Example 1 | Example 2 | Example 3 | Example 4 | Comparative Example 1 |
|---|---|---|---|---|---|
| (1) Fouling of protective pressure-sensitive adhesive sheet | A | A | A | A | B |
| (2) Surface scratches of protective pressure-sensitive adhesive sheet | A | A | A | A | B |
| (3) Surface slip properties | A | A | A | A | B |
| (4) Fitting properties to curved surface | A | A | A | A | A |
| (5) Peeling Ability of application tape | A | A | A | A | - |
| (6) Lifting of protective pressure-sensitive adhesive sheet | not occurred | not occurred | not occurred | not occurred | - |
| (7) Positional shifting of protective pressure-sensitive adhesive sheet | A | A | A | A | B |
| (8) Creasing upon 180° bending | not occurred | not occurred | not occurred | not occurred | occurred |
| (9) (note) 1 Adhesive strength I Adhesive strength II | 0.75 8.1 | 0.50 8.1 | 0.45 8.1 | 0.2 8.1 | - 8.1 |

| | | | | | |
|---|---|---|---|---|---|
| (Note 1) Adhesive strength I: adhesive strength between application tape and protective pressure-sensitive adhesive sheet Adhesive strength II: adhesive strength between protective pressure-sensitive adhesive sheet and adherend | | | | | |

As apparent from Table 1, it was found that the application tapes of Examples 1 to 4 had satisfactory surface slip properties and moderate adhesive strength. Namely, it was found that when the application tapes of Examples 1 to 4 according to the present invention are used to apply a protective pressure-sensitive adhesive sheet, the protective pressure-sensitive adhesive sheet can be applied in a satisfactory state to the adherend without causing positional shifting during the application and while preventing the protective pressure-sensitive adhesive sheet from creasing or lifting up, because the application tapes have satisfactory surface slip properties. Furthermore, after completion of the application operation, the application tapes were able to be easily removed.

In each of the protective pressure-sensitive adhesive sheets of Examples 1 to 4, the coating layer and the base layer were in the state of having been bonded to each other. The coating layer hence was not peeled off from the base layer when the application tape was peeled off. In addition, since the protective pressure-sensitive adhesive sheets of Examples 1 to 4 were equipped with a composite film containing a urethane polymer and an acrylic polymer, the protective pressure-sensitive adhesive sheets were excellent in terms of strength, flexibility, etc. and were able to sufficiently fit to the adherends, e.g., the curved surfaces of the body of a motor vehicle.

In contrast, in Comparative Example 1, in which an application operation was conducted without using the application tape according to the present invention, it was impossible to easily conduct the application operation. In addition, the protective pressure-sensitive adhesive sheet thus applied had suffered positional shifting and adhesion of soils including fingerprints to the surface thereof. Scratches were also observed in the surface thereof.

As explained above, the application tape of the present invention has moderate surface slip properties, moderate flexibility, and moderate adhesive strength. Consequently, when this application tape is used to apply a protective pressure-sensitive adhesive sheet to an adherend (e.g., the body of a motor vehicle), no positional shifting occurs and the protective pressure-sensitive adhesive sheet can be made to sufficiently fit to the curved surfaces without causing a crease or lifting. After the application, the application tape can be easily removed.

While the present invention has been described in detail and with reference to the specific embodiments thereof, it will be apparent to one skilled in the art that various changes and modifications can be made therein without departing from the spirit and scope thereof.
The present application is based on Japanese Patent Application No. 2010-172056 filed on July 30, 2010, and the entire contents are incorporated herein by reference. All references cited herein are incorporated in their entirety.

### INDUSTRIAL APPLICABILITY

The application tape of the present invention can improve the application workability of a protective pressure-sensitive adhesive sheet and the finish (appearance, etc.) of the applied sheet. The application tape hence is effectively utilized in the application of a protective pressure-sensitive adhesive sheet. Since the protective pressure-sensitive adhesive sheet applied has a beautiful appearance, the application tape is suitable for use in application to parts or fields where appearance beautifulness is important or required, such as paint film surfaces of a motor vehicle, aircraft, or the like.

## Claims

1. An application tape, which has a function of improving an application workability when a protective pressure-sensitive adhesive sheet is applied to an adherend, wherein
the application tape has a surface that has a coefficient of static friction for a PET film of 0.05-1.0 in the case where the PET film is slid on the application tape having a size of 30 mm × 30 mm under a condition of a load of 100 g and a rate of 100 mm/min, and
the application tape has a Young's modulus of 300 MPa or lower.

2. The application tape according to claim 1, wherein
the application tape has a lower adhesive strength to the protective pressure-sensitive adhesive sheet than the adhesive strength of the protective pressure-sensitive adhesive sheet to the adherend.

3. The application tape according to claim 1 or 2, wherein
the application tape comprises a base and a pressure-sensitive adhesive layer, and
the base comprises a flexible polyvinyl chloride which contains a plasticizer.

4. The application tape according to claim 3, comprising a base and a pressure-sensitive adhesive layer, wherein
the base comprises a flexible polyvinyl chloride which contains a plasticizer,
the opposite surface of the base from the pressure-sensitive adhesive layer has a coefficient of static friction for a PET film of 0.05-1.0 in the case where the PET film is slid on the application tape having a size of 30 mm × 30 mm under a condition of a load of 100 g and a rate of 100 mm/min,
the pressure-sensitive adhesive layer comprises an acrylic pressure-sensitive adhesive, and
the application tape has a Young's modulus of 300 MPa or lower.

5. The application tape according to claim 3 or 4, wherein
the pressure-sensitive adhesive layer comprises a pressure-sensitive adhesive comprising an acrylic copolymer obtained by copolymerizing a main monomer and a functional group-containing monomer component, wherein
the main monomer is at least one acrylic monomer selected from the group consisting of ethyl acrylate, butyl acrylate, methyl methacrylate, ethyl methacrylate, 2-ethylhexyl acrylate, and acrylonitrile, and the functional group-containing monomer component is acrylic acid and/or methacrylic acid, and wherein
at least a part of the acrylic copolymer is cross-linked.

6. The application tape according to any one of claims 3 to 5, wherein
the base contains at least one plasticizer selected from the group consisting of di(2-ethylhexyl) phthalate (DOP), dibutyl phthalate (DBP), and diisononyl phthalate (DINP), and
the pressure-sensitive adhesive layer comprises an acrylic polymer which has been cross-linked with using at least one cross-linking agent selected from the group consisting of a melamine compound cross-linking agent, an isocyanate compound cross-linking agent, and a glycidylamine compound cross-linking agent.

7. A protective pressure-sensitive adhesive sheet equipped with an application tape, wherein
the protective pressure-sensitive adhesive sheet equipped with an application tape comprises: the application tape according to any one of claims 1 to 6; and a protective pressure-sensitive adhesive sheet comprising an adhesion layer and a base layer.

8. The protective pressure-sensitive adhesive sheet equipped with an application tape, according to claim 7, wherein
the pressure-sensitive adhesive layer comprised in the application tape has an adhesive strength lower than the adhesive strength of the adhesion layer comprised in the protective pressure-sensitive adhesive sheet.

9. The protective pressure-sensitive adhesive sheet equipped with an application tape, according to claim 7 or 8, wherein
the base layer of the protective pressure-sensitive adhesive sheet comprises a urethane polymer.

10. The protective pressure-sensitive adhesive sheet equipped with an application tape, according to any one of claims 7 to 9, wherein
the base layer of the protective pressure-sensitive adhesive sheet has, on the back surface thereof, a coating layer comprising any of a fluoropolymer, an urethane polymer, and a (meth)acrylic polymer.

11. A method for producing a protective pressure-sensitive adhesive sheet equipped with an application tape, comprising
adding a multifunctional isocyanate to a fluoroethylene/vinyl ether alternating copolymer dissolved in a solvent, applying the resultant solution to a polyethylene terephthalate (PET) film which has been treated with a release agent, and drying the applied solution to form a coating layer,
applying a mixture of a urethane polymer and an (meth)acrylic monomer to the coating layer,
irradiating the applied mixture with ultraviolet ray to form a composite film bonded to the coating layer,
forming a adhesion layer on the composite film, and subsequently removing the release agent-treated PET film, and laminating the application tape according to any one of claims 1 to 6 to the coating layer.

12. The protective pressure-sensitive adhesive sheet equipped with an application tape, according to any one of claims 7 to 10, wherein
the protective pressure-sensitive adhesive sheet equipped with an application tape is utilized for application to the painted outer surface of at least one member selected from the group consisting of motor vehicles, motor bicycles, trucks, boats, and aircrafts.
